# FASCICULE DE BREVET EUROPEEN

(11) **EP 1 284 871 B1**
(45) Date de publication et mention de la délivrance du brevet: **20.10.2004**
(21) Numéro de dépôt: 01931813.8
(22) Date de dépôt: 07.05.2001
(51) Int. Cl.: B42D 15/08, G06K 19/04

(54) **SUPPORT PORTABLE D'INFORMATION CONFIDENTIELLE ET PROCEDE DE FABRICATION**
TRAGBARER INFORMATIONSTRÄGER FÜR VERTRAULICHE INFORMATIONEN UND HERSTELLUNGSVERFAHREN
PORTABLE MEDIA FOR CONFIDENTIAL INFORMATION AND METHOD OF MANUFACTURING

(30) Priorité: 10.05.2000 FR 0006319
(43) Date de publication de la demande: 26.02.2003
(73) Titulaire: Gemplus, 13881 Gémenos Cedex (FR)
(72) Inventeur: SPEYER, Bertrand, F-13390 Auriol (FR)
(86) Numéro de dépôt international: PCT/FR2001/001385
(87) Numéro de publication internationale: WO 2001/085468

(56) Documents cités:
- EP-A- 0 374 087
- EP-A- 0 458 024
- US-A- 4 575 121
- US-A- 5 375 764
- US-A- 5 599 046

## Description

L'invention concerne la fourniture d'information confidentielle sur un support matériel, plus particulièrement pour permettre l'accès sécurisé à des services prépayés, notamment dans les secteurs de la téléphonique prépayée ou des loteries.

Ainsi, l'invention concerne des produits tels que des cartes, tickets et autres supports matériels, conçus pour porter au moins une information confidentielle, qui ne doit être accessible qu'à l'acquéreur ou au destinataire final des produits pour l'accès sécurisé à des services prépayés.

Pour simplifier, il est seulement fait référence dans la description aux services de téléphonie prépayée. Cependant l'invention s'applique à d'autres usages, en particulier dans le domaine de l'accès sécurisé à des services prépayés, ainsi que des tickets de loterie.

Il est connu de masquer une information confidentielle portée par un document, pour sa transmission sécurisée à son destinataire. Ainsi, des documents confidentiels ont l'information à rendre déchiffrable uniquement par l'utilisateur brouillée ou masquée par superposition avec des matériaux appropriés, différents et / ou complémentaires du matériau porteur de l'information. L'information confidentielle est alors révélée par enlèvement total ou partiel du matériau de recouvrement ou par grattage de la couche de matériau de recouvrement.

Ces techniques sont cependant coûteuses, car relativement complexes à mettre en oeuvre, puisqu'elles nécessitent plusieurs étapes. De plus, elles présentent des points faibles, c'est-à-dire des séquences opératoires durant lesquelles il est possible de lire l'information qui ne sera intégrée au document, de façon à ne plus être identifiable, que dans une phase ultérieure de réalisation du produit.

Le document EP0458024 décrit une carte postale où une information confidentielle est imprimée sur un support en papier, ensuite recouvert par une couche de scellage.

Le document EP0374087 décrit un feuillet confidentiel en forme de lettre scellée, carte postale ou analogues, et dont le corps qui porte l'information à cacher sur l'une de ses surfaces, et formée par pliage du corps de feuillet en deux au moins.

Le document US5599046 décrit des zones à gratter, et aussi de masquer une inscription confidentielle afin d'éviter qu'elle ne soit visible sous une lumière dense.

Le document US4575121 décrit un module pour transmission postale, particulièrement pour transmettre une information confidentielle comme des relevés de compte bancaire. Au moins quatre sections définies par des lignes de pliage parallèles pour un pliage répété, sont prévues sur une des sections externes du module. Dans une configuration entièrement pliée, on obtient une fenêtre pour l'adresse; les informations utiles de ces sections sont entourées par une bande périmetrique pour le cachetage définitif inviolable, tandis que sur le côté inverse on obtient un collage non-permanent.

Pour les services téléphoniques prépayés, il existe des produits pour la fourniture de numéros confidentiels dits HRN, composés d'un support en carton ou en matière plastique, muni d'un pavé grattable. Il existe également des produits sous forme d'enveloppe plus ou moins opaque contenant une feuille qui porte l'information confidentielle. Cette feuille est munie d'un pavé grattable et introduite dans l'enveloppe. Pour la réalisation d'un tel pavé grattable, on imprime le support avec une information confidentielle et on recouvre cette dernière d'une couche opaque grattable.

Les tickets et cartes selon ces procédés peuvent ensuite être insérés dans un film ou une pellicule d'ensachage transparent, scellé, qui constitue un deuxième niveau d'inviolabilité.

Mais on trouve en vente libre dès pavés grattables autocollants et du film d'ensachage. Par conséquent, lorsque les sites de vente de tels tickets ou cartes grattables ne sont pas suffisamment sécurisés et / ou contrôlés, comme dans de nombreux pays, des cartes lues puis reconditionnées, c'est-à-dire munies d'un pavé adhésif de remplacement du pavé gratté et d'un nouveau film d'emballage, peuvent être remises en vente. De tels produits falsifiés provoquent alors des réclamations et des demandes de remboursement, qui se répercutent jusqu'au fournisseur initial.

De plus, au cours de la fabrication des supports traditionnels pour la fourniture d'information confidentielle, l'information peut être visible par les opérateurs de fabrication, entre les opérations de marquage et de masquage de l'information imprimée. Si l'on cherche alors à réaliser ces opérations en "boîte noire", la fabrication est le plus généralement faite carte à carte et est donc lente et coûteuse. En outre, certaines cartes ainsi fabriquées peuvent être détruites ou détériorées lors de leur ensachage sous film souple, et leur remplacement dans une série de fabrication constitue également un processus lent et coûteux.

Il existait donc un besoin pour des supports d'information, qui soient:
- sécurisés, par l'impossibilité de remettre la carte ou le ticket dans son état initial, une fois que l'information révélée a été lue,
- tels que l'on ne puisse pas lire l'information confidentielle entre son écriture et son recouvrement par un pavé grattable ou tout autre revêtement,
- rapides à produire;
- obtenus de façon telle que les rebuts de production puissent être traités immédiatement en fin de production, c'est-à-dire ne nécessitent pas de reprise d'une opération précédente.

A cet effet, l'invention propose un produit et un procédé définis dans les revendications. On élabore ainsi un support portable d'information confidentielle agencé par exemple pour la fourniture d'accès à des services prépayés, permettant de s'exempter de ces inconvénients.

Ce produit se compose d'un sachet formé à partir d'un matériau souple . multicouche, opaque et scellable, dans lequel l'information confidentielle est imprimée sur au moins l'une des faces intérieures du sachet et peut être lue après déchirure et/ou découpage du sachet.

Ce matériau scellable peut être scellé sur n'importe quelle partie de sa surface, pour permettre de varier à volonté la forme du support.

L'expression "information confidentielle" désigne ici essentiellement des numéros confidentiels. Dans la pratique, cette information pourrait cependant comporter des chiffres et/ou des lettres, sans que l'on sorte du cadre de l'invention tel que défini dans les revendications.

On entend ici par matériau "opaque" un matériau apte à faire barrière aux. rayonnements lumineux ayant une longueur d'onde comprise entre environ 500 et 900 nm, et plus particulièrement un matériau présentant vis-à-vis d'un tel rayonnement lumineux une opacité totale supérieure à 2,5. On considère ici l'opacité totale comme étant celle de l'ensemble des couches et/ou rabats du sachet formé de films du matériau multicouche.

La mesure de la transmission, égale au pourcentage du flux de lumière initial qui traverse la matière dont l'opacité est à évaluer pour une longueur d'oride donnée, donne l'opacité par la relation:

Opacité = Log(1/Transmission).

L'opacité est ainsi une grandeur sans unité de mesure. En dessous de 2, on estime ici que l'opacité est insuffisante. Une opacité de 2,5 qualifie un matériau opaque au sens où on l'entend ici. Une opacité complète correspond à un facteur d'opacité d'environ 3,2.

Le terme "scellable" qualifie ici l'aptitude d'un matériau à être scellé sur lui-même ou sur un autre matériau notamment par scellage à chaud, par ultrasons ou par pression. Un matériau peut être scellé sans apport de matière extérieure ou avec apport d'une matière intermédiaire, telle qu'une matière adhésive, un adhésif double face, un adhésif thermo-activable ou analogues.

L'expression "scellés sur leur périphérie" signifie ici que les matériaux sont scellés selon des lignes périphériques ou sensiblement périphériques. Ainsi, le scellage peut suivre. strictement cette périphérie ou être en retrait de celle-ci. En variante, une partie débordante d'au moins l'un des deux matériaux constitue une oreille de préhension et / ou d'accrochage.

D'autres caractéristiques et avantages de l'invention apparaîtront à la lecture de la description détaillée qui suit, en référence aux figures annexées, dans lesquelles:
Fig. 1 représente schématiquement une vue de dessus en perspective, après pré-scellage sur deux côtés, d'un produit selon l'invention,
Fig. 2 est une vue en coupe transversale schématique selon A-A du produit conforme à la Fig. 1,
Fig. 3 représente une vue en coupe transversale schématique de films pour l'obtention d'une variante du sachet selon l'invention,
Fig. 4 représente schématiquement une vue de dessus en perspective d'une zone de feuille ou bande de matériau pour l'obtention d'une autre variante du sachet selon l'invention,
Fig. 5 est une vue en coupe transversale schématique de la variante du produit selon l'invention selon la Fig. 4, avant scellage, et
Fig. 6 est une vue de dessus d'une forme de réalisation d'un produit selon l'invention, après scellage périphérique complet.

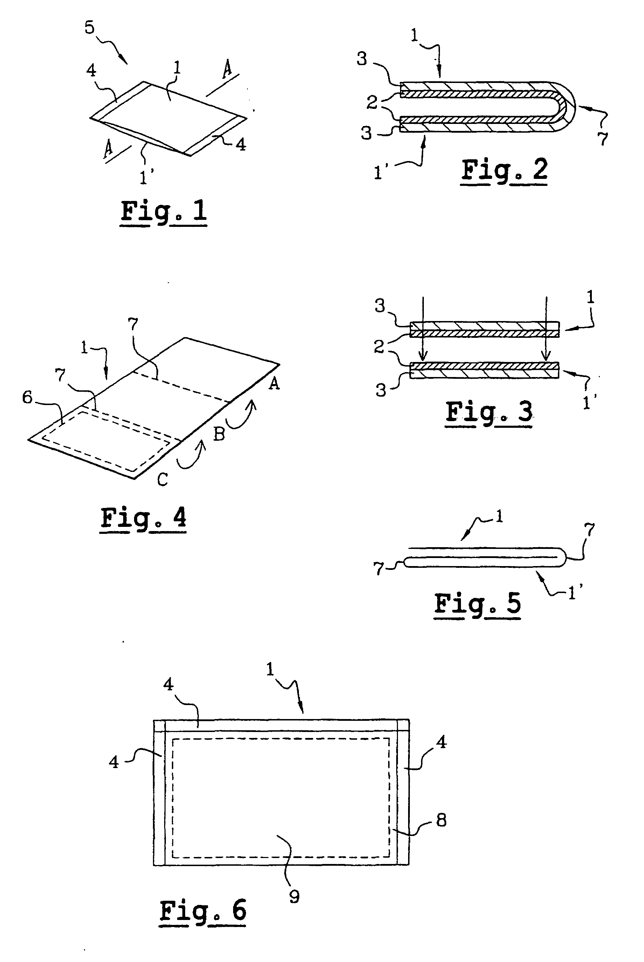

Dans une réalisation représentée sur les figures 1 et 2, un sachet selon l'invention est constitué de deux films bicouche 1,1', dont chacun est composé d'une couche scellable 2 et d'une couche opaque 3. Ces deux films sont scellés entre eux selon des lignes de scellage 4 pour former un sachet fermé 5.

Pour la fabrication d'un tel sachet à l'échelle industrielle, une bande de matériau multicouche approprié est amenée en regard dé têtes d'impression (non représentées) qui, grâce à un repérage adéquat sur la bande, impriment sur des zones prédéfinies de la. bande une information confidentielle, qui peut ensuite être recouverte d'un masquage arrachable, si on le souhaite, et, en option, d'autres informations, non confidentielles, sur une seule face ou sur les deux faces de la bande. Pendant son défilement, la bande est ensuite pliée selon une ligne médiane longitudinale 7, par rapport au sens de défilement de la bande. En pratique, le sens du pliage doit être tel qu'il amène la face du matériau composée d'une couche scellable vers l'intérieur du repli, de manière à permettre le scellage du pourtour des zones imprimées de la bande ainsi pliée. L'information confidentielle imprimée contenue dans le sachet est alors à l'abri des regards et des falsifications.

Le matériau de bande préféré est un complexe multicouche, disponible dans le commerce et classiquement utilisé dans l'industrie alimentaire, notamment pour les opercules et / ou les emballages de produits alimentaires liquides, tels que des produits lactés ou des jus de fruits. Un tel matériau complexe ou composite présente, dans sa forme de réalisation la plus simple, une structure bicouche, composée d'une couche de matériau synthétique thermoplastique, notamment du polyéthylène (PE) et/ou un copolymère d'EAA, et d'une couche métallique, notamment une couche de métal tel que l'aluminium ou une couche de carbone ou de colorant approprié. En variante, le matériau peut comporter d'autres couches, comme par exemple une couche de papier ou d'un autre matériau de teinte claire approprié pour faciliter l'impression sur la face correspondante de la feuille ou bande composée d'un tel matériau complexe ayant au moins les trois couches. Un matériau de ce type est un produit commercialisé sous le nom de "complexe couché", portant une dénomination commerciale composée de: épaisseur en g/Alu/PE(définition technique + épaisseur).

Dans le cas où l'on souhaite introduire dans le produit formant sachet selon l'invention des liquides et/ou des gaz, il est avantageux que le matériau du sachet soit lui-même étanche aux liquides et/ou aux gaz, ce qui peut être obtenu avec une ou plusieurs couches de matériau thermoplastique, notamment de polyéthylène et/ou de copolymère EAA, approprié.

L'épaisseur du matériau en feuille ou bande pour la réalisation. des films peut être, à titre d'exemple non limitatif, d'environ 80 à 150 µm.

Dans la forme de réalisation représentée sur la figure 3, les films 1,1' sont constitués chacun à partir d'une bande différente. Les deux bandes concernées, en défilement parallèle après leurs impressions respectives de manière analogue à ce qui est indiqué ci-dessus, sont amenées en regard et appliquées l'une contre l'autre, du côté de leurs faces scellables. Une énergie de scellage est ensuite appliquée (avec pression selon les flèches de la figure 3) pour réaliser le scellage du sachet, sur la totalité ou une partie de sa périphérie prédéfinie.

Dans une autre forme de réalisation, représentée sur les figures 4-5, le produit selon l'invention est composé à partir d'une feuille ou bande souple d'un matériau complexe tel que décrit plus haut, dont l'une des faces est imprimée de façon appropriée, sur au moins trois zones d'impression, de préférence trois zones contiguës A,B,C, la première de ces zones recevant par exemple l'information confidentielle à masquer, tandis que la deuxième et la troisième zones reçoivent, chacune indépendamment, une impression choisie à convenance, avantageusement une impression de personnalisation sur au moins l'une de ces deux zones. Avantageusement, les impressions des trois zones sont ainsi effectuées du même côté de la feuille ou bande, et le pliage selon les lignes de pliage 7 des zones A,B,C prédéfinies est effectué en conséquence, comme indiqué par les flèches courbes sur la figure 4, puis un pré-scellage est effectué selon les lignes 4 pour donner un produit pré-scellé selon une partie du pourtour prédéfini pour le sachet. Ce produit comporte un rabat intérieur, comme on peut le voir sur la figure 5. Les lignes de pré-scellage suivent une partie seulement de la périphérie, par exemple n-x des n côtés du produit, dont au moins un côté est encore ouvert à ce stade, tandis que n est un nombre entier égal ou supérieur à 3 et x est un nombre entier valant au moins 1. Il est alors possible, en option, d'insérer dans le produit tout élément souhaité, comme par exemple des objets promotionnels, notamment des produits solides, liquides et/ou gazeux, avant scellage définitif du n^{ième} côté du produit, qui forme alors un sachet entièrement scellé.

En variante, les indications qui précèdent peuvent s'appliquer à un groupe de plusieurs produits, fabriqués simultanément, avec une ligne de scellage commune.

De plus, le produit selon l'invention peut être de forme quelconque. En particulier, le pourtour du sachet peut être réalisé selon n'importe quelle forme souhaitée, et les rabats éventuellement présents à l'intérieur du sachet formé selon l'invention (voir figures 4-5) peuvent, eux aussi, être de forme quelconque et être scellés ou non avec les films constitutifs des parois du sachet. Il n'est alors plus question de côtés au sens géométrique du terme et le pré-scellage est simplement agencé pour laisser libre une partie du pourtour du produit suffisante pour permettre une introduction optionnelle d'un élément prédéfini ou choisi à convenance, comme par exemple du parfum, un échantillon de produit solide, un objet de faibles dimensions ou autres.

Cette possibilité de variation à l'infini des formes des sachets constitue un avantage supplémentaire de l'invention. Le fait que l'on préconise l'utilisation d'une feuille ou bande comportant une couche scellable sur toute ou pratiquement toute la surface du film scellable permet effectivement de sceller sans difficulté des sachets de formes très différentes, sans que l'on ait à sélectionner une bande particulière qui aurait un profil de couche de matière scellable approprié, et sans qu'il y ait à changer de bande quand on veut traiter des séries limitées de sachets de formes très diverses, en ligne.

Dans tous les cas, le produit en cours de fabrication peut comporter des lignes de pré-scellage suivant seulement une partie de sa périphérie, tandis que la partie non scellée est encore ouverte à ce stade, pour permettre, en option, d'insérer dans le sachet tout élément additionnel souhaité, comme par exemple des objets promotionnels, avant scellage complet du sachet, qui forme ensuite un sachet entièrement scellé.

Le produit formant support portable d'information confidentielle selon l'invention peut être opaque sur la totalité de sa surface ou seulement sur une partie de celle-ci, par exemple sur la zone ou une partie de la zone destinée à l'impression de l'information confidentielle.

Selon une forme de réalisation préférée, applicable à l'une quelconque des variantes et illustrée sur la figure 6, le produit selon l'invention, scellé selon les lignes 4, peut en outre comporter des pré découpes 6 et/ou 8 (voir figures 4 et 6 respectivement) destinées à permettre de séparer du produit au moins une partie 9 d'au moins l'une de ses faces principales. La partie 9 ainsi enlevée peut, par exemple, permettre d'accéder à l'information confidentielle et/ou être utile comme carte ou ticket, pour les applications indiquées plus haut.

En option, et pour améliorer encore la sécurisation du produit selon l'invention, celui-ci peut également comporter un ou plusieurs éléments de sécurisation additionnels, comme par exemple un fil antenne.

L'invention a également pour objet un procédé pour la réalisation du produit selon l'invention.

Le procédé comporte le scellage au moins selon la périphérie d'un contour prédéfini d'au moins deux films multicouches. On choisit les films. de telle manière que chacun d'eux comporte au moins une couche de scellage et au moins une couche opaque. Quant à l'information confidentielle, elle est imprimée sur l'une des faces scellables d'au moins l'un des films multicouches. Les films sont ensuite réunis par scellage des couches de scellage entre elles pour former un sachet.

Un tel procédé comporte avantageusement les étapes consistant à:
- procurer une feuille ou une bande d'un matériau plastique souple, opaque sur au moins les parties de sa surface destinées à recevoir une information confidentielle ou faisant face à celle-ci, et avantageusement opaque sur toute sa surface,
- imprimer sur ce matériau respectivement au moins une partie des éléments imprimés souhaités et, en même temps que ces éléments ou subséquemment, l'information confidentielle, sur au moins deux zones respectives ou en variante sur les deux faces d'une même zone, préalablement définies sur le support,
- effectuer en option, sur une zone au moins, une pré découpe 6 pour ouvrir le sachet et/ou en extraire un élément,
- plier la feuille ou bande selon au moins une ligne de pliage longitudinal 7 séparant deux zones contiguës,
- ou en variante rapprocher la feuille ou bande imprimée d'une feuille ou bande de matériau de fond 1' (voir figure 3),
- imprimer en option les éléments d'impression encore manquants à ce stade,
- effectuer en option une pré découpe 8 traversante, pour l'ouverture du sachet et/ou l'enlèvement d'une partie de matériau cachant l'information confidentielle, comme par exemple l'une des faces du sachet et/ou une bande de masquage éventuelle, notamment une bande grattable, et
- sceller et découper sur la totalité ou une partie de sa périphérie 4 le produit ainsi élaboré, de façon à former un sachet 5 ou groupe de sachets 5 entièrement fermés ou, en variante, comportant encore une ouverture, et dans ce dernier cas, en option,
- introduire des éléments solides, liquides et/ou gazeux dans le sachet ainsi formé, dans le cas où le sachet comporte encore une ouverture, et sceller l'ouverture.

On entend par "pliage longitudinal" un pliage selon une ligne parallèle au sens de défilement de la bande du matériau soumis au procédé selon l'invention.

Selon un mode de réalisation préféré du point de vue industriel et économique, le film peut regrouper plusieurs unités de produit et les étapes ultérieures conduisent alors à un chapelet de sachets, ayant un nombre d'unités et/ou une longueur que l'on peut choisir à convenance, en adaptant simplement l'équipement pour ce faire. Les sachets ainsi produits en chapelets peuvent ensuite être séparés les uns des autres individuellement ou en lots prédéfinis.

L'invention permet ainsi la réalisation de tickets/cartes comportant des codes confidentiels pour sécuriser l'accès à des services prépayés, notamment des tickets/cartes prépayés pour téléphonie ou des tickets de loterie.

Le sachet formant support d'information confidentielle selon l'invention peut avoir une forme quelconque, qu'il est aisé d'obtenir en utilisant des outils d'estampage/soudure appropriés.

Dans tous les cas où le contour des sachets laisse de la matière inemployée, on enlève celle-ci et on la recycle éventuellement, selon des techniques connues.

En lui procurant lors du scellage et de la découpe subséquente une partie débordante appropriée, que l'on peut munir d'une perforation traversante, on peut doter le sachet selon l'invention d'un organe externe de préhension, éventuellement apte à faciliter l'amorce de découpe du sachet, et/ou d'un moyen d'accrochage de celui-ci, notamment utile sur le lieu de vente.

Pour ouvrir le produit formant sachet selon l'invention, l'utilisateur découpe ou déchire au moins une partie de la périphérie du sachet, et/ou déchire ou découpe celui-ci selon les lignes 6 et/ou 8, et peut conserver selon les cas une ou plusieurs des parties ainsi séparées. L'une au moins des parties de sachet ainsi séparées (par exemple la partie 9) est avantageusement au format ISO des cartes de crédit, en ce qui concerne la largeur et la longueur du rectangle, pour rendre plus pratiques son utilisation et son rangement.

L'invention permet ainsi l'obtention d'un support d'information confidentielle sécurisé, aussi bien au stade de la production qu'au stade de la transmission, jusqu'à la fourniture à l'utilisateur final, de l'information confidentielle concernée.

Le produit et le procédé selon l'invention permettent une production à haut rendement, donc à faible coût et permettent, sur la même ligne de production, l'insertion optionnelle dans le même support d'échantillons promotionnels ou d'autres éléments attractifs ou utiles pour l'acheteur du produit.

## Revendications

1. Produit formant support portable d'information confidentielle ; ce produit comportant au moins deux bandes de matériau multicouches (1, 1') ou films, dont chacun(e) comporte au moins une couche de scellage et au moins une couche opaque (3) ; ces bandes (1,1') ou films étant réuni(e)s par scellage (4) des couches de scellage entre elles, sensiblement sur leur périphérie pour former un sachet (5) ;
**caractérisé en ce que** l'information confidentielle est imprimée sur la couche de scellage (2) ; la bande ou film comportant la couche de scellage (2) sur toute ou pratiquement toute la surface de la bande ou du film.

2. Produit selon la revendication 1, **caractérisé en ce que** l'information confidentielle est un numéro d'accès à un service de téléphonie à pré paiement.

3. Produit selon les revendications 1 et 2, **caractérisé en ce que** le film multicouche comporte une couche ou film opaque (3) lui conférant une opacité totale supérieure à 2,5 et de préférence égale à environ 3, vis-à-vis de rayonnements lumineux ayant une longueur d'onde comprise entre environ 500 et 900 nm.

4. Produit selon la revendication 3, **caractérisé en ce que** le film (3) est opaque sur toute ou pratiquement toute sa surface.

5. Produit selon la revendication 1, **caractérisé en ce que** les films multicouches sont composés d'une couche de matériau synthétique thermoplastique, notamment du polyéthylène, et d'une couche métallique, notamment une couche de métal tel que l'aluminium.

6. Produit selon la revendication 5, **caractérisé en ce qu'**au moins l'un des films multicouches comporte en outre un autre matériau de teinte claire pour faciliter l'impression, notamment du papier.

7. Produit selon l'une des revendications 1 à 6, **caractérisé en ce qu'**il comporte deux films multicouches, formés à partir de deux zones contiguës d'une feuille ou bande, rapprochées par pliage selon une ligne de pliage (7).

8. Produit selon l'une des revendications 1 à 6, **caractérisé en ce qu'**il comporte deux films multicouches, formés respectivement à partir de deux feuilles ou bandes.

9. Produit selon l'une des revendications 1 à 6, **caractérisé en ce qu'**il comporte au moins deux films multicouches, formés à partir de plus de deux zones contiguës (A,B,C) d'une feuille ou bande , repliées sur elles-mêmes selon au moins deux lignes de pliage (7).

10. Produit selon la revendication 9, **caractérisé en ce qu'**il comporte au moins un rabat interne obtenu par pliage selon l'une des lignes (7) et portant au moins une information confidentielle.

11. Produit selon l'une des revendications 1 à 10, **caractérisé en ce que** le produit forme un sachet apte à être découpé et / ou déchiré au moins sur une partie de sa périphérie et / ou d'au moins l'une de ses faces, pour rendre accessible l'information confidentielle.

12. Produit selon l'une des revendications 1 à 11, **caractérisé en ce qu'**au moins l'une des faces extérieures et / ou intérieures d'au moins l'un des films multicouches formant le sachet porte des indications non confidentielles, par exemple de personnalisation, notamment un logo et / ou une valeur faciale.

13. Produit selon la revendication 9, **caractérisé en ce qu'**il est formé à partir de trois zones contiguës (A,B,C) d'une feuille ou bande souple, la première de ces zones recevant l'information confidentielle, tandis que la deuxième et la troisième zones reçoivent une impression choisie à convenance, avantageusement une impression de personnalisation sur au moins l'une de ces deux zones, et les trois zones (A,B,C) étant repliées l'une sur l'autre selon les lignes de pliage (7) de telle manière que l'information confidentielle se situe sur un rabat interne au sachet obtenu après scellage des zones (B), (C) et éventuellement (A) sur leur périphérie.

14. Procédé de fabrication d'un produit formant support portable d'information confidentielle ; ce produit comportant au moins deux bandes de matériau multicouches (1, 1') ou films, dont chacun (e) comporte au moins une couche de scellage et au moins une couche opaque (3) ; ces bandes (1,1') ou films étant réuni(e)s par scellage (4) des couches de scellage entre elles, sensiblement sur leur périphérie pour former un sachet (5);
**caractérisé par** l'impression de l'information confidentielle sur la couche de scellage (2).

## Patentansprüche

1. Einen tragbaren Informationsträger für vertrauliche Informationen bildendes Produkt; wobei dieses Produkt wenigstens zwei Bänder aus vielschichtigem Material (1, 1') oder Folie, von denen jedes (2) wenigstens eine Versiegelungsschicht und wenigstens eine blickdichte Schicht (3) umfasst, wobei diese Bänder (1, 1') oder Folien durch Versiegeln (4) der Versiegelungsschichten untereinander deutlich auf ihrer Peripherie vereinigt sind, um einen Beutel (5) zu bilden;
**dadurch gekennzeichnet, dass** die vertrauliche Information auf der Versiegelungsschicht (2) aufgedruckt ist; wobei das Band oder die Folie eine Versiegelungsschicht (2) auf der ganzen oder praktisch der ganzen Fläche des Bandes oder der Folie umfasst.

2. Produkt gemäß Anspruch 1, **dadurch gekennzeichnet, dass** die vertrauliche Information eine Zugangsnummer zu einem vorausbezahlten Telefondienst ist.

3. Produkt gemäß Anspruch 1 und 2, **dadurch gekennzeichnet, dass** die Multischichtfolie eine ihr eine vollkommene Undurchlässigkeit von über 2,5 und bevorzugt gleich ungefähr 3 gegenüber Lichtstrahlen mit einer zwischen ungefähr 500 und 900 nm inbegriffenen Wellenlänge verleihende blickdichte Schicht oder Folie (3) ist.

4. Produkt gemäß Anspruch 3, **dadurch gekennzeichnet, dass** die Folie (3) auf der ganzen oder praktisch der ganzen Fläche blickdicht ist.

5. Produkt gemäß Anspruch 1, **dadurch gekennzeichnet, dass** die vielschichtige Folien aus einer aus thermoplastischem synthetischem Material, insbesondere aus Polyethylen bestehenden Schicht und einer Metallschicht, insbesondere einer Metallschicht, wie zum Beispiel aus Aluminium gebildet werden.

6. Produkt gemäß Anspruch 5, **dadurch gekennzeichnet, dass** wenigstens eine der vielschichtigen Folien darüber hinaus zur Erleichterung des Aufdrucks ein anderes Material in einem hellen Farbton, zum Beispiel aus Papier, umfasst.

7. Produkt gemäß Anspruch 1 bis 6, **dadurch gekennzeichnet, dass** es zwei ausgehend von zwei, durch Falten gemäß einer Faltlinie (7) angenäherten, angrenzenden Bereichen eines Blattes oder eines Bandes gebildeten vielschichtige Folien umfasst.

8. Produkt gemäß Anspruch 1 bis 6, **dadurch gekennzeichnet, dass** es zwei jeweils ausgehend von zwei Blättern oder Bändern gebildete vielschichtige Folien umfasst.

9. Produkt gemäß Anspruch 1 bis 6, **dadurch gekennzeichnet, dass** es wenigstens zwei ausgehend von mehr als zwei, gemäß wenigstens zwei Faltlinien (7) nach übereinander gefalteten, angrenzenden Bereichen (A, B, C) eines Blattes oder Bandes gebildete vielschichtige Folien umfasst.

10. Produkt gemäß Anspruch 9, **dadurch gekennzeichnet, dass** es wenigstens einen internen, durch Falten gemäß einer der Linien (7) erhaltenen und wenigstens eine vertrauliche Information tragenden Umschlag umfasst.

11. Produkt gemäß Anspruch 1 bis 10, **dadurch gekennzeichnet, dass** das Produkt einen zum Zerschneiden und / oder Zerreißen wenigstens an einem Teil seiner Peripherie und / oder wenigstens einer seiner Seiten geeigneten Beutel bildet, um die vertrauliche Information zugänglich zu machen.

12. Produkt gemäß Anspruch 1 bis 11, **dadurch gekennzeichnet, dass** wenigstens eine der äußeren und / oder inneren Seiten einer der den Beutel bildenden vielschichtigen Folien nicht vertrauliche Angaben trägt, zum Beispiel insbesondere die individuelle Gestaltung eines Logos und / oder eines vorderen Wertes.

13. Produkt gemäß Anspruch 9, **dadurch gekennzeichnet, dass** es ausgehend von drei angrenzenden Bereichen (A, B, C) aus einer Folie oder einem elastischen Band gebildet wird, wobei der erste dieser Bereiche die vertrauliche Information aufnimmt, während der zweite und der dritte Bereich einen passend gewählten Aufdruck aufnehmen, vorteilhaft einen individuell gestalteten Aufdruck auf wenigstens einem dieser beiden Bereiche, und die drei Bereiche (A, B, C) übereinander gemäß den Faltlinien (7) derart umgefaltet sind, dass die vertrauliche Information sich auf einem internen Umschlag im nach Versiegelung der Bereiche (B), (C) und eventuell (A) auf ihrer Peripherie erhaltnen Beutel befindet.

14. Herstellungsverfahren eines einen tragbaren Träger vertraulicher Informationen bildenden Produkts; wobei dieses Produkt wenigstens zwei Bänder aus vielschichtigem Material (1, 1') oder -folien umfasst, von denen jedes wenigstens eine Versiegelungsschicht und wenigstens eine blickdichte Schichte (3) umfasst; wobei diese Bänder (1, 1') oder Folien durch Versiegeln (4) der Versiegelungsschichten untereinander deutlich auf ihrer Peripherie vereinigt sind, um einen Beutel (5) zu bilden;
**gekennzeichnet durch** die vertrauliche Information auf der Versiegelungsschicht (2).

## Claims

1. A product forming a portable confidential information medium; this product comprising at least two strips of multilayer material (1, 1') or films, each of which comprises at least one sealing layer and at least one opaque layer (3); these strips (1, 1') or films being joined by sealing (4) of the sealing layers to each other, substantially over their periphery, in order to form a sachet (5);
**characterised in that** the confidential information is printed on the sealing layer (2); the strip or film comprising the sealing layer (2) over all or practically all of the surface of the strip or film.

2. A product according to Claim 1, **characterised in that** the confidential information is a number for access to a prepayment telephony service.

3. A product according to Claims 1 and 2, **characterised in that** the multilayer film comprises an opaque layer or film (3) conferring on it total opacity greater than 2.5 and preferably equal to approximately 5, vis-à-vis light radiation having a wavelength of between approximately 500 and 900 nm.

4. A product according to Claim 3, **characterised in that** the film (3) is opaque over all or practically all of its surface.

5. A product according to Claim 1, **characterised in that** the multilayer films are composed of a layer of synthetic thermoplastic material, in particular polyethylene, and a metallic layer, in particular a layer of metal such as aluminium.

6. A product according to Claim 5, **characterised in that** at least one of the multilayer films also comprises another light-coloured material in order to facilitate printing, in particular paper.

7. A product according to one of Claims 1 to 6, **characterised in that** it comprises two multilayer films, formed from two contiguous areas of a sheet or strip, brought together by folding along a folding line (7).

8. A product according to one of Claims 1 to 6, **characterised in that** it comprises two multilayer films, formed respectively from two sheets or strips.

9. A product according to one of Claims 1 to 6, **characterised in that** it comprises at least two multilayer films, formed from more than two contiguous areas (A, B, C) of a sheet or strip, folded on themselves along at least two folding lines (7).

10. A product according to Claim 9, **characterised in that** it comprises at least one internal flap obtained by folding along one of the lines (7) and carrying at least one item of confidential information.

11. A product according to one of Claims 1 to 10, **characterised in that** the product forms a sachet able to be cut and/or torn at least over part of its periphery and/or at least one of its faces, in order to make the confidential information accessible.

12. A product according to one of Claims 1 to 11, **characterised in that** at least one of the external and/or internal faces of at least one of the multilayer films forming the sachet carries non-confidential information, for example for personalisation, in particular a logo and/or a face value.

13. A product according to Claim 9, **characterised in that** it is formed from three contiguous areas (A, B, C) of a flexible sheet or strip, the first of these areas receiving the confidential information whilst the second and third areas receive suitably chosen printing, advantageously personalisation printing on at least one of these two areas, and the three areas (A, B, C) being folded on each other along the folding lines (7) so that the confidential information is situated on a flap internal to the sachet obtained after sealing of the areas (B), (C) and possibly (A) on their periphery.

14. A method of manufacturing a product forming a portable confidential information medium; this product comprising at least two strips of multilayer material (1, 1') or films, each of which comprises at least one sealing layer and at least one opaque layer (3); these strips (1, 1') or films being joined by sealing (4) of the sealing layers on each other, substantially on their periphery, in order to form a sachet (5);
**characterised by** the printing of the confidential information on the sealing layer (2).
